# DEMANDE DE BREVET EUROPEEN

(11) **EP 4 354 350 A1**
(43) Date de publication de la demande: **17.04.2024**
(21) Numéro de dépôt: 23199602.6
(22) Date de dépôt: 26.09.2023
(51) Int. Cl.: G06N 3/063, G06N 3/10

(54) **PROCÉDÉ DE GÉNÉRATION D'UN CODE EXÉCUTABLE PAR ORDINATEUR POUR METTRE EN OEVRE UN RÉSEAU DE NEURONES ARTIFICIELS**

(30) Priorité: 10.10.2022 FR 2210376
(71) Demandeur: STMicroelectronics (Rousset) SAS, 13790 Rousset (FR); STMicroelectronics S.r.l., Agrate Brianza (IT)
(72) Inventeur: FOLLIOT, Laurent, 06620 Gourdon (FR); LATTUADA, Marco, 20025 Legnano-Milan (IT); DEMAJ, Pierre, 06200 Nice (FR)
(74) Mandataire: Casalonga

(57) **Abrégé**

Selon un aspect, il est proposé un procédé de génération d'un code exécutable par un ordinateur pour mettre en oeuvre un réseau de neurones artificiels (INN) comportant une élaboration (25) du code exécutable (ONN) en choisissant pour chaque couche du réseau de neurones (INN) une solution d'implémentation parmi les solutions d'implémentation possibles de cette couche en fonction de la perte de performances en termes de temps d'exécution et/ou d'allocation de cette solution d'implémentation par rapport au seuil de temps d'exécution maximal et/ou du seuil d'allocation mémoire maximale.

## Description

Des modes de réalisation et de mise en oeuvre concernent les réseaux de neurones artificiels.

Les réseaux de neurones artificiels comprennent généralement une succession de couches de neurones. Chaque couche prend en entrée des données auxquelles des poids sont appliqués et délivre en sortie des données de sortie après traitement par des fonctions d'activation des neurones de ladite couche. Ces données de sortie sont transmises à la couche suivante dans le réseau de neurones.

Les poids sont des données, plus particulièrement des paramètres, de neurones configurables pour obtenir de bonnes données en sortie des couches.

Les poids sont ajustés lors d'une phase d'apprentissage généralement supervisée, notamment en exécutant le réseau de neurones avec comme données d'entrée des données déjà classifiées d'une base de données de référence.

Les réseaux de neurones quantifiés une fois entraînés sont intégrés sur des plateformes, notamment sur des circuits intégrés tels que des microcontrôleurs.

En particulier, il est possible d'utiliser un logiciel d'intégration pour intégrer un réseau de neurones quantifié dans une plateforme. On connaît par exemple le logiciel d'intégration STM32Cube.AI et son extension X-CUBE-AI développés par la société STMicroelectronics.

L'exécution du réseau de neurones peut demander des ressources importantes en mémoire pour stocker les poids et les données générées par le réseau de neurones (en particulier les activations). L'exécution du réseau de neurones peut également être effectué sur un nombre élevé de cycles de traitement.

Les codes exécutables par ordinateur des réseaux de neurones peuvent être évalués selon différents critères de performance. Un premier critère de performance est l'allocation de la mémoire non volatile utilisée pour stocker les poids du réseau de neurones. Un deuxième critère de performance est l'allocation de la mémoire volatile requise pour stocker les données générées par les différentes couches du réseau de neurones lors de l'exécution du réseau de neurones. Un troisième critère de performance est le temps d'exécution du réseau de neurones.

Afin d'améliorer les performances des réseaux de neurones, les codes exécutables des réseaux de neurones peuvent être optimisés avant leur intégration dans un circuit intégré. Par exemple, les codes exécutables des réseaux de neurones peuvent être optimisés pour réduire leur temps d'exécution. Les codes exécutables des réseaux de neurones peuvent également être optimisés pour réduire l'allocation mémoire requise pour leur exécution. Ainsi, le logiciel d'intégration peut notamment être configuré pour générer un code exécutable amélioré, notamment optimisé, du réseau de neurones quantifié en termes de temps d'exécution et d'allocation mémoire requise.

Il serait en théorie préférable d'optimiser conjointement le temps d'exécution du réseau de neurones et l'allocation mémoire requise pour son exécution. Néanmoins, en réalité, les optimisations de ces critères de performance sont généralement opposées. Ainsi, l'optimisation du temps d'exécution entraîne généralement une augmentation de l'allocation mémoire requise pour l'exécution du réseau de neurones, et l'optimisation de l'allocation mémoire requise entraîne généralement une augmentation du temps d'exécution du réseau de neurones.

Les solutions connues d'optimisation des codes exécutables des réseau de neurones ne permettent pas d'obtenir un bon compromis entre l'allocation mémoire requise et le temps d'exécution du réseau de neurones.

Ainsi, certaines solutions choisissent d'optimiser l'allocation mémoire alors que d'autres solutions choisissent d'optimiser plutôt le temps d'exécution. Or, certains utilisateurs peuvent souhaiter un meilleur compromis entre ces deux critères de performance.

Il convient donc de proposer une solution de génération d'un code exécutable d'un réseau de neurones permettant d'améliorer le compromis entre l'optimisation de l'allocation mémoire et celle du temps d'exécution.

Dans la présente, on entend par le terme « optimisation », une amélioration au regard de certains critères de performance. Cette amélioration du réseau de neurones ne correspond pas forcément à une amélioration optimale du réseau de neurones.

Selon un aspect, il est proposé un procédé de génération d'un code exécutable par un ordinateur pour mettre en oeuvre un réseau de neurones artificiels comportant :
- une obtention du réseau de neurones, le réseau de neurones présentant une pluralité de couches de neurones, chaque couche pouvant être exécutée selon différentes solutions d'implémentation impactant l'allocation mémoire requise pour l'exécution du réseau de neurones et/ou le temps d'exécution du réseau de neurones,
- une définition d'un seuil de temps d'exécution maximal du réseau de neurones et/ou d'un seuil d'allocation mémoire maximale requise pour l'exécution du réseau de neurones,
- une détermination d'une taille d'allocation mémoire optimale requise pour l'exécution du réseau de neurones à partir des solutions d'implémentation possibles pour chaque couche du réseau de neurones,
- une détermination d'un temps d'exécution optimal du réseau de neurones à partir des solutions d'implémentation possibles pour chaque couche du réseau de neurones,
- une estimation d'un gain ou une perte de performances en termes de temps d'exécution et d'allocation mémoire requise pour chaque solution d'implémentation de chaque couche du réseau de neurones,
- une élaboration d'un code exécutable pour mettre en oeuvre le réseau de neurones optimisé en choisissant pour chaque couche du réseau de neurones une solution d'implémentation parmi les solutions d'implémentation possibles de cette couche en fonction de la perte de performances en termes de temps d'exécution et/ou d'allocation de cette solution d'implémentation par rapport au seuil de temps d'exécution maximal et/ou du seuil d'allocation mémoire maximale.

Un tel procédé permet à un utilisateur du réseau de neurones de de définir une taille d'allocation mémoire maximale souhaitée ainsi qu'un temps d'exécution maximal souhaité. Par exemple, l'utilisateur du réseau de neurones peut indiquer les critères de performance souhaités via une interface graphique d'un logiciel d'intégration ou via une ligne de commande.

Un tel procédé permet de réduire l'allocation mémoire requise au détriment du temps d'exécution, ou inversement, tout en respectant un temps d'exécution maximal ou une taille d'allocation mémoire maximale définis par l'utilisateur.

Un tel procédé permet ainsi de trouver un compromis satisfaisant pour l'utilisateur entre le temps d'exécution et l'allocation mémoire requise pour l'exécution du réseau de neurones.

Dans un mode de réalisation, la taille d'allocation mémoire optimale requise pour l'exécution du réseau de neurones est déterminée en évaluant les placements possibles des données générées par les couches du réseau de neurones.

De préférence, le temps d'exécution optimal du réseau de neurones est déterminé en choisissant pour chaque couche la solution d'implémentation la plus rapide parmi les solutions d'implémentation possibles de cette couche.

Avantageusement, l'estimation d'un gain ou une perte de performances en termes de temps d'exécution d'une solution d'implémentation d'une couche est réalisée en évaluant l'impact de la solution d'implémentation sur le temps d'exécution du réseau de neurones.

Dans un mode de réalisation avantageux, l'estimation d'un gain ou une perte de performances en termes d'allocation mémoire requise de la solution d'implémentation d'une couche est réalisée en évaluant l'impact de la solution d'implémentation sur l'allocation mémoire requise pour l'exécution du réseau de neurones.

De préférence, le procédé comprend en outre un calcul de coût de compromis pour chaque solution d'implémentation, de façon à construire une première liste ordonnant les solutions d'implémentation des couches selon leur coût de compromis par rapport à l'allocation mémoire requise et/ou une deuxième liste ordonnant les solutions d'implémentation des couches selon leur coût de compromis par rapport au temps d'exécution.

Avantageusement, le code exécutable pour mettre en oeuvre le réseau de neurones est élaboré en prenant les solutions d'implémentation de ladite première liste et/ou de ladite deuxième liste dans l'ordre croissant de coût de compromis et en comparant la perte de performances en termes de temps d'exécution et/ou d'allocation de chaque solution d'implémentation de la liste par rapport au seuil de temps d'exécution maximal et/ou du seuil d'allocation mémoire maximale.

Selon un autre aspect, il est proposé un produit programme d'ordinateur comprenant des instructions qui, lorsque le programme est exécuté par un ordinateur, conduisent celui-ci à mettre en oeuvre un procédé tel que décrit précédemment. Il est également proposé un support de données lisible par ordinateur, sur lequel est enregistré un tel produit programme d'ordinateur.

Selon un autre aspect, il est proposé un produit programme d'ordinateur comprenant des instructions qui, lorsque le programme est exécuté par un ordinateur, conduisent celui-ci à mettre en oeuvre le code exécutable obtenu par la mise en oeuvre d'un procédé tel que décrit précédemment. Il est également proposé un support de données lisible par ordinateur, sur lequel est enregistré un tel produit programme d'ordinateur.

D'autres avantages et caractéristiques de l'invention apparaîtront à l'examen de la description détaillée de modes de réalisation, nullement limitatifs, et des dessins annexés sur lesquels :
[Fig 1]

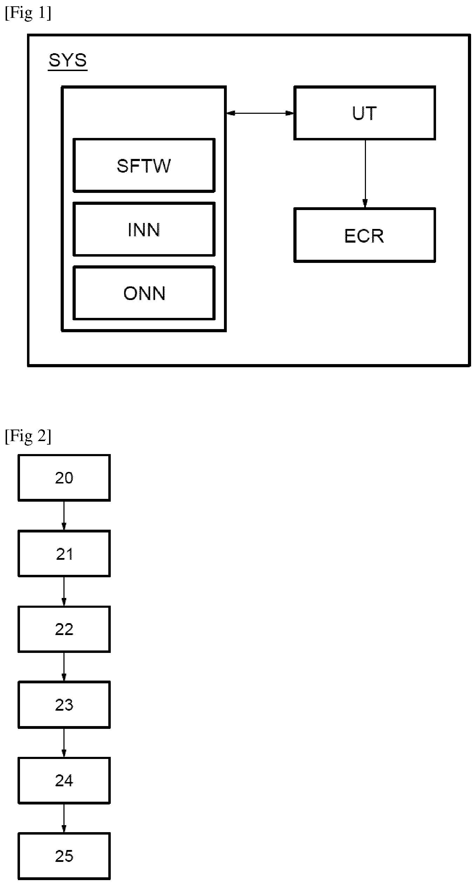

[Fig 2] illustrent des modes de réalisation et de mise en oeuvre de l'invention.

La figure 1 illustre un système informatique SYS configuré pour mettre en oeuvre un procédé de génération d'un code exécutable par un ordinateur pour la mise en oeuvre d'un réseau de neurones, tel que décrit dans la suite en relation avec la figure 2. Le système SYS peut être un ordinateur par exemple.

Le système SYS comprend une mémoire non volatile MNV et une unité de traitement UT. La mémoire MNV est configurée pour stocker le réseau de neurones INN déjà entraîné et un code exécutable ONN, notamment optimisé, généré à partir du réseau de neurones INN par la mise en oeuvre du procédé de génération décrit dans la suite.

La mémoire non volatile est également configurée pour stocker le logiciel d'intégration SFTW. Ce logiciel d'intégration SFTW est un programme d'ordinateur qui comprend des instructions qui lorsque le logiciel d'intégration SFTW est exécuté par l'unité de traitement UT, conduisent celui-ci à mettre en oeuvre le procédé de génération décrit dans la suite.

L'unité de traitement UT est donc configurée pour exécuter le logiciel d'intégration SFTW et ainsi mettre en oeuvre le procédé de génération décrit dans la suite.

Le système informatique SYS comprend un écran ECR configuré pour afficher des informations pour l'utilisateur, notamment via une interface graphique du logiciel d'intégration SFTW.

La figure 2 illustre un mode de mise en oeuvre d'un procédé de génération d'un code exécutable par un ordinateur pour mettre en oeuvre un réseau de neurones artificiels INN. Un tel procédé peut être mis en oeuvre par un système informatique SYS tel que décrit précédemment, notamment par l'unité de traitement UT.

Le procédé comporte une étape 20 d'obtention d'un réseau de neurones INN. Dans cette étape 20, un utilisateur fournit le réseau de neurones artificiels INN en entrée du logiciel d'intégration SFTW. Le logiciel d'intégration SFTW est configuré pour réaliser une optimisation du réseau de neurones artificiels INN afin d'intégrer le code exécutable optimisé ONN du réseau de neurones obtenu sur une plateforme, notamment un microcontrôleur. Une telle plateforme pourra ensuite exécuter le code exécutable optimisé ONN du réseau de neurones.

Le réseau de neurones artificiel INN comprend une succession de couches de neurones. Dans certains cas, le réseau de neurones artificiels INN peut présenter plusieurs branches parallèles dans lesquels sont réparties des couches du réseau de neurones. Chaque couche prend en entrée des données auxquelles des poids de la couche sont appliqués. Chaque couche délivre en sortie des données de sortie après traitement par des fonctions d'activation des neurones de ladite couche. Ces données de sortie sont transmises à la couche suivante dans le réseau de neurones.

Chaque couche du réseau de neurones peut être implémentée (c'est-à-dire mise en oeuvre) selon différentes solutions d'implémentation. Chaque solution d'implémentation impacte l'allocation mémoire requise pour l'exécution du réseau de neurones et/ou le temps d'exécution du réseau de neurones. Le procédé de génération du code exécutable permet à un utilisateur de chercher les solutions d'implémentation de chaque couche du réseau de neurones qui peuvent satisfaire les critères de performance souhaités par l'utilisateur en termes d'allocation mémoire requise et de temps d'exécution du réseau de neurones.

Afin de générer le code exécutable du réseau de neurones INN fourni par l'utilisateur, le procédé comporte tout d'abord une étape 21 de détermination d'une taille d'allocation mémoire optimale requise pour l'exécution du réseau de neurones. En particulier, l'exécution du réseau de neurones requiert un stockage des données générées par chaque couche du réseau de neurones. Ces données sont généralement stockées dans une mémoire volatile, notamment une mémoire RAM (acronyme de l'anglais « Random Access memory ».

La détermination de la taille d'allocation mémoire optimale peut être réalisée par différentes méthodes. Plus particulièrement, la taille d'allocation mémoire optimale peut être déterminée en identifiant les placements optimaux en mémoire des blocs de données générés par les différentes couches du réseau de neurones. Par exemple, la détermination de la taille d'allocation mémoire optimale peut être réalisée en mettant en oeuvre le procédé décrit dans la demande de brevet français ayant pour numéro de dépôt n°20.04337. Il est ainsi possible d'obtenir pour chaque couche du réseau de neurones une solution d'implémentation permettant une allocation minimale de la mémoire. Cette solution d'implémentation est désignée comme solution d'optimisation d'allocation mémoire.

Le procédé comprend également une première étape 22 de détermination dans laquelle est estimé un temps d'exécution optimal du réseau de neurones. En particulier, le temps d'exécution du réseau de neurones correspond au temps nécessaire pour exécuter l'ensemble des couches du réseau de neurones. Le temps d'exécution optimal peut être déterminé en appliquant des méthodes d'optimisation d'exécution sur chaque couche du réseau de neurones. Il est par exemple possible de fusionner des couches de mise en commun ou effectuer une superposition de tas de données (en anglais « heap overlay »). Il est ainsi possible d'obtenir une solution d'implémentation du réseau de neurones permettant un temps minimal d'exécution du réseau de neurones. Ce temps minimal d'exécution étant obtenu en choisissant la solution d'implémentation la plus rapide pour chaque couche du réseau de neurones.

Ces solutions d'implémentation sont désignées comme solution d'optimisation de temps d'exécution. De telles solutions d'implémentation peuvent néanmoins entrainer une augmentation de l'allocation mémoire requise pour l'exécution du réseau de neurones par rapport aux solutions d'implémentation permettant une allocation minimale de la mémoire.

Ainsi, le procédé comprend ensuite une deuxième étape 23 d'estimation dans laquelle est estimé un gain ou une perte de performances en termes de temps d'exécution et d'allocation mémoire requise pour l'exécution du réseau de neurones pour chaque solution d'implémentation de chaque couche du réseau de neurones.

En particulier, le gain ou la perte en termes de temps d'exécution d'une solution d'implémentation est estimé par calcul du temps d'exécution pour chaque solution d'implémentation. Plus particulièrement, le temps d'exécution pour chaque solution d'implémentation peut être calculé à partir du nombre de multiplications et d'accumulations réalisées pour chaque couche et/ou à partir du type de cette couche.

Le temps d'exécution pour chaque solution d'implémentation peut également être calculé à partir de méthodes d'apprentissage automatique (en anglais « machine learning »), notamment à l'aide d'un modèle de régression linéaire.

Le gain ou la perte en termes d'allocation mémoire d'une solution d'implémentation peut être estimé approximativement en considérant l'effet de chaque solution d'implémentation d'une couche prise isolément. Il est également possible d'estimer un tel gain ou une telle perte en mettant en oeuvre le procédé indiqué précédemment de placements de blocs de données générées par les couches du réseau de neurones en prenant comme contrainte la solution d'implémentation étudiée.

Le procédé comprend une étape 24 de calcul de coût de compromis. Dans cette étape 24, pour chaque couche et pour chaque solution d'implémentation de cette couche qui ne correspond pas à une solution d'implémentation permettant une allocation minimale de la mémoire, il est calculé un coût d'amélioration du temps d'exécution.

Ce coût d'amélioration du temps d'exécution s'exprime par le rapport entre la perte en termes d'allocation mémoire requise et du gain en termes de temps d'exécution. Une liste est créée ordonnant les couches selon leur coût d'amélioration du temps d'exécution à partir de la couche la moins coûteuse.

En outre, dans cette étape 24, pour chaque couche et pour chaque solution d'implémentation de cette couche qui ne correspond pas à une solution d'implémentation permettant un temps d'exécution minimal de la mémoire, il est calculé un coût d'amélioration de l'allocation mémoire requise. Ce coût d'amélioration de l'allocation mémoire s'exprime par le rapport entre la perte en termes de temps d'exécution et du gain en termes d'allocation mémoire requise. Une liste est créée ordonnant les couches selon leur coût d'amélioration de l'allocation mémoire à partir de la couche la moins coûteuse.

Le procédé comprend également une étape 25 d'élaboration d'un code exécutable optimisé du réseau de neurones. Dans cette étape 25, le logiciel d'intégration décide quelle solution d'implémentation mettre en oeuvre pour chaque couche du réseau de neurones.

Pour ce faire, le logiciel d'intégration propose différents modes d'optimisation à l'utilisateur. L'utilisateur choisit le mode d'optimisation à mettre en oeuvre selon les critères de performance souhaité par l'utilisateur. En particulier, le choix peut être réalisé par l'utilisateur via une interface graphique du logiciel d'intégration affichée sur l'écran ECR du système informatique SYS.

Le choix peut également être réalisé via une ligne de code pouvant être interprétée par le logiciel d'intégration. Le choix du mode d'optimisation porte sur des options jouant sur les différents critères de performance (allocation mémoire requise pour l'exécution du réseau de neurones et temps d'exécution du réseau de neurones).

Un premier mode d'optimisation permet à l'utilisateur d'optimiser au mieux l'allocation mémoire requise pour l'exécution du réseau de neurones.

Dans ce premier mode d'optimisation, les couches du réseau de neurones sont initialement configurées selon la solution d'optimisation d'allocation mémoire.

Ensuite, la solution d'optimisation de temps d'exécution est testée pour chaque couche du réseau de neurones, afin de déterminer si cette solution augmente ou non l'allocation mémoire requise.

Si la solution d'optimisation de temps d'exécution d'une couche n'augmente pas l'allocation mémoire requise, alors cette couche est implémentée selon la solution d'optimisation de temps d'exécution.

À l'inverse, si la solution d'optimisation de temps d'exécution d'une couche augmente l'allocation mémoire requise, alors cette couche est implémentée selon la solution d'optimisation d'allocation mémoire.

De préférence, la solution d'optimisation de temps d'exécution est testée pour chaque couche dans la liste ordonnant les couches selon leur coût d'amélioration du temps d'exécution à partir de la couche la moins coûteuse.

Un deuxième mode d'optimisation permet à l'utilisateur d'optimiser au mieux le temps d'exécution du réseau de neurones.

Dans ce deuxième mode d'optimisation, toutes les couches du réseau de neurones sont implémentées selon la solution d'optimisation de temps d'exécution.

Un troisième mode d'optimisation permet à l'utilisateur d'optimiser le temps d'exécution du réseau de neurones, en prenant comme contrainte un seuil maximal d'allocation mémoire requise pour l'exécution du réseau de neurones défini par l'utilisateur.

Dans ce troisième mode d'optimisation, les couches du réseau de neurones sont initialement configurées selon la solution d'optimisation d'allocation mémoire.

Ensuite, la solution d'optimisation de temps d'exécution est testée pour chaque couche du réseau de neurones, afin de déterminer si cette solution augmente ou non l'allocation mémoire requise au-delà d'un seuil prédéfini par l'utilisateur.

Si la solution d'optimisation de temps d'exécution d'une couche n'augmente pas l'allocation mémoire requise au-delà du seuil prédéfini par l'utilisateur, alors cette couche est implémentée selon la solution d'optimisation de temps d'exécution et l'allocation mémoire requise est mise à jour.

À l'inverse, si la solution d'optimisation de temps d'exécution d'une couche augmente l'allocation mémoire requise au-delà du seuil prédéfini par l'utilisateur, alors cette couche est implémentée selon la solution d'optimisation d'allocation mémoire.

De préférence, la solution d'optimisation de temps d'exécution est testée pour chaque couche dans la liste ordonnant les solutions d'implémentation des couches selon leur coût d'amélioration du temps d'exécution à partir de la couche la moins coûteuse.

Un quatrième mode d'optimisation permet à l'utilisateur d'optimiser l'allocation mémoire requise pour l'exécution du réseau de neurones, en prenant comme contrainte un seuil maximal de temps d'exécution du réseau de neurones défini par l'utilisateur.

Dans ce quatrième mode d'optimisation, les couches du réseau de neurones sont initialement configurées selon la solution d'optimisation de temps d'exécution. Ensuite, la solution d'optimisation d'allocation mémoire est testée pour chaque couche du réseau de neurones, afin de déterminer si cette solution augmente ou non le temps d'exécution du réseau de neurones au-delà d'un seuil prédéfini par l'utilisateur.

Si la solution d'optimisation d'allocation mémoire d'une couche n'augmente pas le temps d'exécution du réseau de neurones au-delà du seuil prédéfini par l'utilisateur, alors cette couche est implémentée selon la solution d'optimisation d'allocation mémoire et le temps d'exécution du réseau de neurones est mis à jour.

À l'inverse, si la solution d'optimisation d'allocation mémoire d'une couche augmente le temps d'exécution du réseau de neurones au-delà du seuil prédéfini par l'utilisateur, alors cette couche est implémentée selon la solution d'optimisation de temps d'exécution.

De préférence, la solution d'optimisation d'allocation mémoire est testée pour chaque couche dans la liste ordonnant les couches selon leur coût d'amélioration de l'allocation mémoire à partir de la couche la moins coûteuse.

Le code exécutable optimisé du réseau de neurones élaboré par le logiciel d'intégration est ensuite stocké dans la mémoire non volatile MNV du système informatique SYS.

Un tel procédé de génération d'un code exécutable pour mettre en oeuvre un réseau de neurones présente l'avantage de proposer différents modes d'optimisation à l'utilisateur. L'utilisateur peut ainsi choisir le mode d'optimisation à mettre en oeuvre selon des critères d'optimisation définis par l'utilisateur. En particulier, l'utilisateur peut préférer optimiser l'allocation mémoire requise pour l'exécution du réseau de neurones ou bien le temps d'exécution du réseau de neurones.

En particulier, le premier mode d'optimisation permet à l'utilisateur d'optimiser le code exécutable pour mettre en oeuvre le réseau de neurones de façon à réduire au mieux l'allocation mémoire requise pour l'exécution du réseau de neurones.

Le deuxième mode d'optimisation permet à l'utilisateur d'optimiser le code exécutable pour mettre en oeuvre le réseau de neurones de façon à réduire au mieux le temps d'exécution du réseau de neurones.

Le troisième mode d'optimisation permet à l'utilisateur de faire un compromis entre allocation mémoire requise et temps d'exécution en définissant une allocation mémoire maximale souhaitée pour l'optimisation du réseau de neurones. En effet, le troisième mode d'optimisation permet d'optimiser le code exécutable pour mettre en oeuvre le réseau de neurones en termes de temps d'exécution tant que l'allocation mémoire requise est inférieure à un seuil maximal.

Le quatrième mode d'optimisation permet à l'utilisateur de faire un compromis entre allocation mémoire requise et temps d'exécution en définissant temps d'exécution maximal souhaité pour l'optimisation du réseau de neurones. En effet, le quatrième mode d'optimisation permet d'optimiser le code exécutable pour mettre en oeuvre le réseau de neurones en termes d'allocation mémoire requise tant que le temps d'exécution du réseau de neurones est inférieur à un seuil maximal.

## Revendications

1. Procédé de génération d'un code exécutable par un ordinateur pour mettre en oeuvre un réseau de neurones artificiels comportant :
- une obtention (20) du réseau de neurones (INN), le réseau de neurones présentant une pluralité de couches de neurones, chaque couche pouvant être exécutée selon différentes solutions d'implémentation impactant l'allocation mémoire requise pour l'exécution du réseau de neurones et/ou le temps d'exécution du réseau de neurones,
- une définition d'un seuil de temps d'exécution maximal du réseau de neurones et/ou d'un seuil d'allocation mémoire maximale requise pour l'exécution du réseau de neurones,
- une détermination (21) d'une taille d'allocation mémoire optimale requise pour l'exécution du réseau de neurones à partir des solutions d'implémentation possibles pour chaque couche du réseau de neurones,
- une détermination (22) d'un temps d'exécution optimal du réseau de neurones à partir des solutions d'implémentation possibles pour chaque couche du réseau de neurones,
- une estimation (23) d'un gain ou une perte de performances en termes de temps d'exécution et d'allocation mémoire requise pour chaque solution d'implémentation de chaque couche du réseau de neurones,
- une élaboration (25) d'un code exécutable (ONN) pour mettre en oeuvre le réseau de neurones (INN) en choisissant pour chaque couche du réseau de neurones (INN) une solution d'implémentation parmi les solutions d'implémentation possibles de cette couche en fonction de la perte de performances en termes de temps d'exécution et/ou d'allocation de cette solution d'implémentation par rapport au seuil de temps d'exécution maximal et/ou du seuil d'allocation mémoire maximale.

2. Procédé selon la revendication 1, dans lequel la taille d'allocation mémoire optimale requise pour l'exécution du réseau de neurones est déterminée en évaluant les placements possibles des données générées par les couches du réseau de neurones.

3. Procédé selon l'une des revendications 1 ou 2, dans lequel le temps d'exécution optimal du réseau de neurones est déterminé en choisissant pour chaque couche la solution d'implémentation la plus rapide parmi les solutions d'implémentation possibles de cette couche.

4. Procédé selon l'une des revendications 1 à 3, dans lequel l'estimation (23) d'un gain ou une perte de performances en termes de temps d'exécution d'une solution d'implémentation d'une couche est réalisée en évaluant l'impact de la solution d'implémentation sur le temps d'exécution du réseau de neurones.

5. Procédé selon l'une des revendications 1 à 4, dans lequel l'estimation (23) d'un gain ou une perte de performances en termes d'allocation mémoire requise de la solution d'implémentation d'une couche est réalisée en évaluant l'impact de la solution d'implémentation sur l'allocation mémoire requise pour l'exécution du réseau de neurones.

6. Procédé selon l'une des revendications 1 à 5, comprenant en outre un calcul (24) de coût de compromis pour chaque solution d'implémentation, de façon à construire une première liste ordonnant les solutions d'implémentation des couches selon leur coût de compromis par rapport à l'allocation mémoire requise et/ou une deuxième liste ordonnant les solutions d'implémentation des couches selon leur coût de compromis par rapport au temps d'exécution.

7. Procédé selon la revendication 6 dans lequel le code exécutable pour mettre en oeuvre le réseau de neurones est élaboré en prenant les solutions d'implémentation de ladite première liste et/ou de ladite deuxième liste dans l'ordre croissant de coût de compromis et en comparant la perte de performances en termes de temps d'exécution et/ou d'allocation de chaque solution d'implémentation de la liste par rapport au seuil de temps d'exécution maximal et/ou du seuil d'allocation mémoire maximale.

8. Produit programme d'ordinateur comprenant des instructions qui, lorsque le programme est exécuté par un ordinateur, conduisent celui-ci à mettre en oeuvre un procédé selon l'une des revendications 1 à 7.

9. Support de données lisible par ordinateur, sur lequel est enregistré le produit programme d'ordinateur selon la revendication 8.

10. Produit programme d'ordinateur comprenant des instructions qui, lorsque le programme est exécuté par un ordinateur, conduisent celui-ci à mettre en oeuvre le code exécutable obtenu par la mise en oeuvre d'un procédé selon l'une des revendications 1 à 7.

11. Support de données lisible par ordinateur, sur lequel est enregistré le produit programme d'ordinateur selon la revendication 10.
